# EUROPEAN PATENT APPLICATION

(11) **EP 4 691 728 A1**
(43) Date of publication of application: **11.02.2026**
(21) Application number: 24778874.8
(22) Date of filing: 21.02.2024
(51) Int. Cl.: B29C 45/14, B29B 9/00, B29C 45/00, C08L 51/04, C08L 59/00

(54) **INSERT MOLDED BODY, ANCHOR FOR ATTACHING SEAT BELT, AND METHOD FOR PRODUCING INSERT MOLDED BODY**

(30) Priority: 29.03.2023 JP 2023053546
(71) Applicant: GLOBAL POLYACETAL CO., LTD., Tokyo 105-0021 (JP)
(72) Inventor: YAMAMOTO, Yuta, Hiratsuka-shi, Kanagawa 254-0016 (JP); ISHII, Takashi, Hiratsuka-shi, Kanagawa 254-0016 (JP)
(74) Representative: Zimmermann & Partner Patentanwälte mbB
(86) International application number: PCT/JP2024/006279
(87) International publication number: WO 2024/202730

(57) **Abstract**

An insert molded body contains a resin part formed from a resin composition containing a polycetal resin and an elastomer; and a metal part, wherein the elastomer contains a core-shell elastomer, a polyurethane content in 100% by mass of the resin composition is less than 1% by mass, the core-shell elastomer in the resin part has a maximum secondary particle size of 1000 nm or less, and a minimum value of a thickness ratio of the resin part of the insert molded body to the metal part (resin part/metal part) is 1.5 or less. A Seat belt attachment anchor that the insert molded body is used for, and a method for producing the insert molded body.

## Description

### Technical Field

The present invention relates to an insert molded body, a seat belt attachment anchor, and a method for producing an insert molded body. In particular, the present invention relates to an insert molded body having a polyacetal resin as a main component.

### Background Art

Polyacetal resins have high mechanical strength and rigidity, excellent resistance to oils and organic solvents, are well-balanced over a wide temperature range, and are easy to process. Therefore, polyacetal resins are widely used as a representative engineering plastic in office automation equipment, digital home appliances, automobile parts, and other industrial parts.

One known use of polyacetal resins is as an insert molded body including a polyacetal resin and a metal part.

For example, Patent Literature 1 discloses a metal insert molded body that contains a polyacetal resin composition containing, relative to 100 parts by mass of a polyacetal resin having a melt flow rate of 1.0 to 5.0 g/10 min, 0.01 to 5 parts by mass of a hydrazide compound, 0.01 to 1 part by mass of polyethylene glycol, and a coloring pigment.

### Citation List

### Patent Literature

Patent Literature 1
Japanese Patent Laid-Open No. 2022-098154 A

### Summary of the Invention

### Technical Problem

In an insert molded body including a resin part formed from a polyacetal resin and a metal part, cracks tend to occur in the resin part. These cracks are due to stress caused by differences in the linear expansion coefficient and shrinkage rate between the resin part and the metal part. Further, when cracks occur, the cracks tend to occur in a welded portion of the resin part. In other words, the resin part in an insert molded body needs to have high weld elongation and be less prone to cracking.

The present invention aims to solve the above-mentioned problem, and an object of the present invention is to provide an insert molded body including a resin part and a metal part, which has high weld elongation of the resin part and is less prone to cracking, as well as a seat belt attachment anchor, and a method for producing the insert molded body.

### Solution to Problem

The present inventors conducted research to address the above-mentioned problems and aimed at stress caused by differences in the linear expansion coefficient and shrinkage rate between the resin part and the metal part in causes of cracks in the resin part. Further, in order to treat this stress, they ventured to use a flexible polyacetal resin. In other words, they conducted research in not reducing stress but relaxing stress by using the flexible polyacetal resin. However, in order to make the polyacetal resin flexible, they sometimes found low weld elongation by blending with elastomer. Under these circumstances, the present inventors conducted further research, and as a result, discovered that the problems described above could be solved by selecting a core-shell elastomer as elastomer, by adjusting such that a maximum secondary particle size of the core-shell elastomer in the resin part is 1000 nm or less, and by not substantially blending with a polyurethane.

Specifically, the problems described above are solved by the following means.
<1> An insert molded body comprising:
   a resin part formed from a resin composition containing a polyacetal resin and an elastomer; and a metal part,
   wherein the elastomer contains a core-shell elastomer, a polyurethane content in 100% by mass of the resin composition is less than 1% by mass, the core-shell elastomer in the resin part has a maximum secondary particle size of 1000 nm or less, and a minimum value of a thickness ratio of the resin part of the insert molded body to the metal part (resin part/metal part) is 1.5 or less.
<2> The insert molded body according to <1>, wherein the polyacetal resin has a melt volume rate (MVR) measured at 190°C and 2.16 kg in accordance with the ISO1133 standard of from 0.5 to 20 cm³/10 minutes.
<3> The insert molded body according to <1> or <2>, wherein the insert molded body has a three-layer structure in which the resin part, the metal part, and the resin part are in contact with each other in that order.
<4> The insert molded body according to any one of <1> to <3>, wherein the insert molded body has a welded portion.
<5> The insert molded body according to any one of <1> to <4>, wherein the core-shell elastomer in the resin part has a maximum secondary particle size of from 10 to 900 nm.
<6> The insert molded body according to any one of <1> to <5>, wherein a core-shell elastomer content in the resin composition is from 5 to 40% by mass.
<7> The insert molded body according to any one of <1> to <6>, wherein in the core-shell elastomer, the core contains a butadiene-containing rubber and/or an acrylate-based rubber, and the shell contains an acrylic resin.
<8> The insert molded body according to any one of <1> to <7>, wherein
   the polyacetal resin has a melt volume rate (MVR) measured at 190°C and 2.16 kg in accordance with the ISO1133 standard of from 0.5 to 20 cm³/10 minutes, the insert molded body has a three-layer structure in which the resin part, the metal part, and the resin part are in contact with each other in that order, the insert molded body has a welded portion, the core-shell elastomer in the resin part has a maximum secondary particle size of from 10 to 900 nm, a core-shell elastomer content in the resin composition is from 5 to 40% by mass, in the core-shell elastomer, the core contains a butadiene-containing rubber, and the shell contains an acrylic resin.
<9> A seat belt attachment anchor comprising the insert molded body according to any one of <1> to <8>.
<10> A method for producing the insert molded body according to any one of <1> to <8>, wherein the method uses pellets obtained by melt-kneading a resin composition containing a polyacetal resin and an elastomer using a twin-screw extruder at a rotation speed of 90 rpm or more.

### Advantageous Effects of the Invention

The present invention can provide an insert molded body including a resin part and a metal part, which has high weld elongation of the resin part and is less prone to cracking, as well as a seat belt attachment anchor, and a method for producing the insert molded body.

### Brief Description of the Drawing

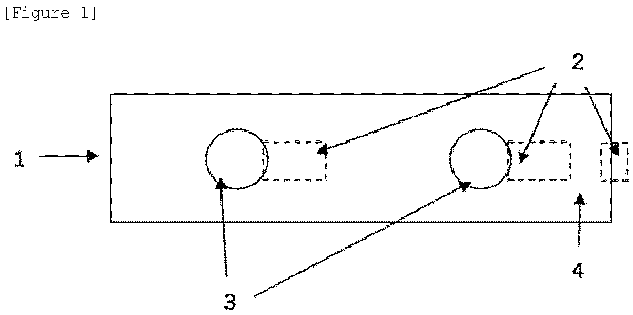

[Figure 1] Figure 1 is a schematic diagram for illustrating an insert molded body of this embodiment.

### Description of Embodiments

A mode for carrying out the present invention (hereinafter, simply referred to as "this embodiment") will now be described in detail. It is noted that this embodiment is an illustrative example for describing the present invention, and the present invention is not limited to only this embodiment.

In addition, in this specification, the meaning of "from ... to" includes the numerical values described before and after "..." as a lower limit value and an upper limit value.

In this specification, various physical property values and characteristic values are assumed to be values as of 23°C, unless otherwise stated.

In this specification, "(meth)acrylic" refers to both or either of acrylic and methacrylic.

If the measurement methods and the like described in the standards shown in this specification differ from year to year, unless otherwise stated, those measurement standards shall be based on the standards as of January 1, 2023.

The scale and the like of Figure 1 may be different from the actual case.

The insert molded body of this embodiment is an insert molded body including a resin part formed from a resin composition containing a polyacetal resin and an elastomer, and a metal part, wherein the elastomer contains a core-shell elastomer, a polyurethane content in 100% by mass of the resin composition is less than 1% by mass, the core-shell elastomer in the resin part has a maximum secondary particle size of 1000 nm or less, and a minimum value of a thickness ratio of the resin part of the insert molded body to the metal part (resin part/metal part) is 1.5 or less. With such a configuration, an insert molded body having excellent weld elongation of the resin part and that is less prone to cracking can be obtained.

The reason for this is inferred to be that by blending with a core-shell elastomer, the polyacetal resin becomes more flexible, and by molding such that the maximum secondary particle size of the core-shell elastomer in the resin part is 1000 nm or less, an insert molded body is obtained in which the resin part is flexible and has excellent weld elongation as well.

### <Resin part>

The resin part of this embodiment is formed from a resin composition that contains a polyacetal resin and an elastomer. The resin part of this embodiment is usually formed by placing a metal part in a mold and performing insert injection molding with the resin composition. When the resin part is formed by injection molding, a welded portion is usually formed at the filling end or the inserted portion (around the metal fixing pin) in the mold, and the welded portion may cause cracks. Further, depending on the shape of the molded article, a plurality of welded portions may be formed in other places. This embodiment has succeeded in effectively suppressing cracks in the welded portion by increasing the elongation of the welded portion.

In this embodiment, the maximum secondary particle size of the core-shell elastomer in the resin part is 1000 nm or less. With this configuration, cracking of the welded portion can be effectively suppressed.

It is considered that one way to make the maximum secondary particle size of the core-shell elastomer at 1000 nm or less is to improve the dispersibility of the core-shell elastomer in the polyacetal resin. Specifically, this is achieved by, for example, selecting a twin-screw extruder when melt-kneading the polyacetal resin and the core-shell elastomer, increasing the rotation speed during melt-kneading, using a polyacetal resin with a low viscosity, and selecting the material of the core-shell elastomer. In order to achieve the above-described maximum secondary particle size, it is not necessary to satisfy all of these means, and the desired means can be selected as appropriate.

The maximum secondary particle size of the core-shell elastomer is a value measured in accordance with the Examples, which are described later.

In this embodiment, the maximum secondary particle size of the core-shell elastomer in the polyacetal resin is preferably 900 nm or less, more preferably 600 nm or less, further preferably 400 nm or less, much further preferably 350 nm or less, and still much further preferably 279 nm or less. By setting the maximum secondary particle size to be less than or equal to the above-described upper limit value, weld elongation tends to be higher. Further, the maximum secondary particle size of the core-shell elastomer is preferably 10 nm or more, more preferably 30 nm or more, further preferably 50 nm or more, much further preferably 70 nm or more, still much further preferably 100 nm or more, and even much further preferably 110 nm or more. By setting the maximum secondary particle size to be more than or equal to the above-described lower limit value, handleability up to the stage of melt-kneading and availability tend to be excellent.

The resin part of this embodiment is formed from a resin composition. Details of the resin composition are described later.

The thickness of the resin part is, at the thinnest portion, preferably 0.5 mm or more, and preferably 20 mm or less. Further, the thickness of the resin part is, at the thickest portion, preferably 0.5 mm or more, and preferably 20 mm or less.

### <<Polyacetal resin>>

The resin composition used in this embodiment contains a polyacetal resin.

The polyacetal resin used in this embodiment is not particularly limited, and may be a homopolymer containing only a divalent oxymethylene group as a constituent unit, or may be a copolymer containing a divalent oxymethylene group and a divalent oxyalkylene group having from 2 to 6 carbon atoms as constituent units.

Examples of the oxyalkylene group having from 2 to 6 carbon atoms include an oxyethylene group, an oxypropylene group, an oxybutylene group, and the like.

In the polyacetal resin, the proportion of the oxyalkylene group having from 2 to 6 carbon atoms with respect to the total number of moles of the oxymethylene group and the oxyalkylene group having from 2 to 6 carbon atoms, is not particularly limited, and may be 0.5 to 10 mol%.

In order to produce the above polyacetal resin, trioxane is usually used as the main raw material. Further, in order to introduce the oxyalkylene group having from 2 to 6 carbon atoms into the polyacetal resin, a cyclic formal or a cyclic ether can be used. Specific examples of the cyclic formal include 1,3-dioxolane, 1,3-dioxane, 1,3-dioxepane, 1,3-dioxocane, 1,3,5-trioxepane, 1,3,6-trioxocane, and the like. Specific examples of the cyclic ether include ethylene oxide, propylene oxide, butylene oxide, and the like. To introduce an oxyethylene group into the polyacetal resin, 1,3-dioxolane can be used as the main raw material, to introduce an oxypropylene group, 1,3-dioxane can be used as the main raw material, and to introduce an oxybutylene group, 1,3-dioxepane can be used as the main raw material. In addition, in the polyacetal resin, it is preferred that the amount of hemiformal terminal groups, the amount of formyl terminal groups, and the amount of terminal groups unstable to heat, acids, and bases are small. Here, a hemiformal terminal group is represented by -OCH₂OH, and the formyl terminal group is represented by -CHO.

As the polyacetal resin, in addition to those described above, the polyacetal resins described in paragraphs 0018 to 0043 of Japanese Patent Laid-Open No. 2015-074724 A, the contents of which are incorporated herein by reference, can be used.

The polyacetal resin has a melt volume rate (MVR) measured at 190°C and 2.16 kg in accordance with the ISO1133 standard of preferably 0.5 cm³/10 minutes or more, more preferably 1 cm³/10 minutes or more, further preferably 3 cm³/10 minutes or more, much further preferably 5 cm³/10 minutes or more, and still much further preferably 6 cm³/10 minutes or more. By setting the MVR to be equal to or more than the above lower limit value, the resin temperature during extrusion can be controlled to suppress thermal decomposition and discoloration of the resin and generation of formaldehyde. Further, the polyacetal resin has a melt volume rate (MVR) measured at 190°C and 2.16 kg in accordance with the ISO1133 standard of preferably 20 cm³/10 minutes or less, more preferably 18 cm³/10 minutes or less, further preferably 13 cm³/10 minutes or less, much further preferably 10 cm³/10 minutes or less, and still much further preferably 8 cm³/10 minutes or less. By setting the MVR to be equal to or less than the above upper limit value, it tends to be possible to reduce the maximum secondary particle size of the core-shell elastomer.

The resin composition used in this embodiment may include only one type of the polyacetal resin, or two or more types thereof. When two or more types are included, it is preferred that the MVR of the mixture falls within the above ranges.

The content of the polyacetal resin in the resin composition used in this embodiment is, in 100% by mass of the resin composition, preferably 60% by mass or more, more preferably 70% by mass or more, further preferably 75% by mass or more, much further preferably 80% by mass or more, and still much further preferably 85% by mass or more. In addition, the content is preferably 97% by mass or less, more preferably 96% by mass or less, further preferably 95% by mass or less, much further preferably 94% by mass or less, and still much further preferably 92% by mass or less.

The resin composition used in this embodiment may include only one type of the polyacetal resin, or two or more types thereof. When two or more types are included, it is preferred that the total amount falls within the above ranges.

### <<Elastomer>>

The resin composition used in this embodiment includes an elastomer. By including an elastomer, cracking of the metal insert molded body tends to be suppressed, and the impact resistance of the resulting resin part tends to be improved.

The elastomer used in this embodiment includes a core-shell elastomer. By including a core-shell elastomer, flexibility can be imparted to the resin composition.

A core-shell elastomer is a polymer with a multilayer structure having a core portion and a shell layer that covers a part or all of the core portion. The Kane Ace series from Kaneka Corporation and the Metablen series from Mitsubishi Chemical Corporation are known core-shell elastomers.

The type of core-shell elastomer used in this embodiment is not particularly limited, but the core is preferably a rubber-based polymer. The rubber-based polymer preferably contains at least one selected from a butadiene-containing rubber, a butyl acrylate-containing rubber, a 2-ethylhexyl acrylate-containing rubber, a silicone-based rubber, and an acrylate-based rubber, and more preferably the core contains a butadiene-containing rubber and/or an acrylate-based rubber. The shell is preferably a polymer of one or more monomers such as a (meth)acrylic ester and an aromatic vinyl compound, and more preferably is a polymer (acrylic resin) in which units derived from a (meth)acrylic ester account for 50% by mass or more of the whole. By using an acrylic resin, dispersibility in the polyacetal resin can be further improved.

In the core-shell elastomer used in this embodiment, the core preferably contains a butadiene-containing rubber and/or an acrylate-based rubber, and the shell preferably contains an acrylic resin. When such a core-shell elastomer is used, the effects of the present invention tend to be more effectively exhibited.

The resin composition of this embodiment preferably contains 5% by mass or more of the core-shell elastomer, more preferably 7% by mass or more, and further preferably 8% by mass or more. By setting the core-shell elastomer content to be equal to or more than the above lower limit value, the impact resistance tends to be further improved. The upper limit of the core-shell elastomer content is preferably 40% by mass or less, much further preferably 30% by mass or less, still much further preferably 20% by mass or less, and may be 15% by mass or less, 14% by mass or less, 12% by mass or less, or 11% by mass or less. By setting the content to be equal to or less than the above upper limit value, it tends to be possible to effectively suppress formaldehyde released from the resin composition.

The resin composition used in this embodiment may include only one type of the core-shell elastomer, or two or more types thereof. When two or more types are included, it is preferred that the total amount falls within the above ranges.

The resin composition used in this embodiment has a polyurethane content of less than 1% by mass in 100% by mass of the resin composition. In this way, by not containing polyurethane or containing only a small amount, it is possible to improve the weld elongation of the resin part of the obtained insert molded body. More specifically, it tends to be possible to effectively suppress the polyurethane from deforming into layers due to the pressure generated in the welded portion during insert molding, which can lead to cracks.

The polyurethane content in 100% by mass of the resin composition is preferably less than 0.5% by mass, more preferably less than 0.1% by mass, and further preferably less than 0.01% by mass. The lower limit of the polyurethane content in 100% by mass of the resin composition is preferably 0% by mass.

In addition, the content of elastomers other than the core-shell elastomer (non-core-shell elastomers) in 100% by mass of the resin composition is preferably less than 1% by mass. In this way, by not including elastomers other than the core-shell elastomer (non-core-shell elastomers) or by using only a very small amount thereof, the weld elongation of the resin part of the obtained insert molded body can be improved.

In the resin composition used in this embodiment, the total amount of the polyacetal resin and core-shell elastomer preferably accounts for 90% by mass or more, more preferably 95% by mass or more, and further preferably 98% by mass or more, of the resin composition. However, the total amount of the polyacetal resin and core-shell elastomer does not exceed 100% by mass.

### <<Other components>>

The resin composition used in this embodiment may contain any conventionally known additives or fillers within a range that does not impair the object of the present invention. Examples of additives and fillers used in this embodiment include a thermoplastic resin other than the polyacetal resin, an ultraviolet absorber, an antioxidant (hindered phenol-based antioxidant and the like), a stabilizer (melamine and the like), a formaldehyde scavenger, a stress relaxation agent, a sliding agent, a pigment, a mold release agent, an antistatic agent, carbon fiber, glass fiber, glass flakes, potassium titanate whiskers, and the like. Details regarding these may be found in the descriptions in paragraphs 0113 to 0124 of Japanese Patent Laid-Open No. 2017-025257 A and paragraphs 0032 to 0069 of Japanese Patent Laid-Open No. 2022-98154 A, the contents of which are incorporated herein by reference.

The resin composition used in this embodiment preferably contains a hindered phenol-based antioxidant, melamine (stabilizer), and a mold release agent as other components. Further, when the resin composition used in this embodiment is used for automobile applications, the resin composition preferably contains a hindered amine-based light stabilizer, an ultraviolet absorber, and a formaldehyde scavenger in addition to the hindered phenol-based antioxidant, melamine (stabilizer), and mold release agent.

The resin composition used in this embodiment can be configured to be substantially free of coloring agents. "Substantially free" means that the content of coloring agents is less than 0.01% by mass, and preferably less than 0.001% by mass, relative to 100 parts by mass of the polyacetal resin.

Further, the resin composition used in this embodiment can be configured to be substantially free of coloring pigments. "Substantially free" means that the content of coloring pigments is less than 0.01% by mass, and preferably less than 0.001% by mass, relative to 100 parts by mass of the polyacetal resin.

### <Physical properties of resin composition>

The resin composition used in this embodiment preferably has excellent weld elongation. Specifically, when the resin composition is molded into an ASTM tensile test specimen (thickness 1.6 mm, gate at both ends of the specimen) provided with a welded portion in the center of the specimen, and subjected to a tensile test in accordance with ASTM D638, it is preferable that the weld elongation is 10% or more, more preferably 12% or more, and further preferably 15% or more. Further, the upper limit of the weld elongation is not limited, and is, for example, 150% or less.

The weld elongation is each measured in accordance with the description in the Examples described later.

### <Method for producing resin composition>

The resin composition used in this embodiment contains the above-described essential components and, if necessary, the above-described optional components. Further, as the production method, it is preferred to use a method such that the maximum secondary particle size falls within the above range.

One method for making the maximum secondary particle size to be within the above range is to use pellets obtained by melt-kneading a raw material containing the polyacetal resin and the elastomer using a twin-screw extruder at a rotation speed of 90 rpm or more. By injection-molding such pellets, the dispersibility of the core-shell elastomer in the polyacetal resin is improved, and the maximum secondary particle size of the core-shell elastomer in the resin part of the obtained insert molded body can be reduced.

More specifically, a method can be used in which the polyacetal resin and the core-shell elastomer are mixed in a tumbler, the resultant mixture is extruded from a melt kneader and discharged from a die as strands, which are then cut into pellets. At this time, it is preferable to use a twin-screw extruder as the melt kneader, since a single-screw extruder tends to cause secondary agglomeration. It is preferred that the melt kneader have an L/D, which is the ratio of the length L (mm) of the screw to the diameter D (mm) of the same screw, of 20 or more, more preferably 30 or more, and preferably 100 or less, more preferably 70 or less. By setting the L/D to 20 or more, the core-shell elastomer tends to be finely dispersed, and secondary agglomeration of the core-shell elastomer can be effectively suppressed. Further, by setting the L/D to 100 or less, discoloration of the resin composition due to thermal degradation tends to be effectively suppressed.

The screw diameter D (mm) is preferably 5 mm or more, and is preferably 40 mm or less, and more preferably 35 mm or less.

The screw rotation speed during melt-kneading is preferably 90 rpm or more, more preferably 95 rpm or more, more preferably 100 rpm or more, further preferably 105 rpm or more, much further preferably 110 rpm or more, and still much further preferably 115 rpm or more. Further, the screw rotation speed is preferably 500 rpm or less, more preferably 400 rpm or less, and may be 350 rpm or less, 3000 rpm or less, 250 rpm or less, or 1200 rpm or less. By setting the screw rotation speed to 90 rpm or more, the core-shell elastomer tends to be finely dispersed, and the occurrence of secondary agglomeration tends to be suppressed more effectively. Further, by setting the screw rotation speed to 500 rpm or less, the generation of heat during melt-kneading can be suppressed, and discoloration of the resin composition due to thermal degradation tends to be effectively suppressed. In addition, since the optimal screw rotation speed varies depending on the diameter, L/D, screw configuration, and discharge rate of the extruder, it is preferable to select the optimal rotation speed each time while checking the secondary particle size of the core-shell elastomer and the resin temperature during melt-kneading.

Moreover, the discharge rate is preferably 5 kg/hr or more, more preferably 7 kg/hr or more, and preferably 1,000 kg/hr or less, more preferably 800 kg/hr or less. By setting the discharge rate to 5 kg/hr or more, the core-shell elastomer tends to be more finely dispersed, and the occurrence of secondary agglomeration can be effectively suppressed. Further, setting the discharge rate to 1,000 kg/hr or less tends to allow the generation of heat during melt-kneading to be effectively suppressed and discoloration of the resin composition due to thermal degradation to be effectively suppressed.

The diameter of the extruder is preferably 10 mm or more, more preferably 20 mm or more, and more preferably 25 mm or more. Further, the diameter is preferably 100 mm or less, preferably 90 mm or less, and more preferably 80 mm or less. Setting the diameter to 10 mm or more tends to allow good productivity to be obtained, and setting the diameter to 100 mm or less tends to allow secondary aggregation of the core-shell elastomer to be effectively suppressed, heat generation during melt-kneading to be effectively suppressed, and discoloration of the resin composition due to thermal degradation to be effectively suppressed.

The cylinder temperature during melt-kneading can be freely set, but it is preferable to set the temperature in accordance with the torque during extrusion and the temperature of the resin composition during melt-kneading (at the time of discharge from the die). From the viewpoint of the melting temperature of the polyacetal resin, the cylinder temperature is preferably 170°C or higher, and from the viewpoint of thermal degradation and thermal decomposition of the polyacetal resin, the temperature is preferably 240°C or lower. It is also possible to set, as long as melt-kneading is not affected, a portion of the extruder cylinder to a temperature of 170°C or lower or 240°C or higher.

In addition, the temperature of the resin composition during melt-kneading (at the time of discharge from the die) may be equal to or higher than the temperature at which the polyacetal resin melts, specifically, equal to or higher than the melting temperature of the polyacetal resin, but is preferably 170°C or higher, more preferably 190°C or higher, and is preferably 250°C or lower, more preferably 230°C or lower. By setting the melting temperature to 170°C or higher, melting is sufficient and production volume tends to improve. Further, by setting the temperature to 250°C or less, discoloration of the resin composition due to thermal degradation tends to be effectively suppressed.

Although the screw configuration of the twin-screw extruder is not particularly limited, in one preferred embodiment, the twin-screw extruder may have at least two kneading portions. Each kneading portion has a kneading disk, and mainly contributes to the melting of the resin and the dispersing of the elastomer.

### <Metal part>

The insert molded body of this embodiment has a metal part.

The metal material constituting the metal part is not particularly limited, and a molded body made of a known metal can be appropriately selected depending on the application. For example, the metal part can be selected from iron, various stainless steels, aluminum and alloys thereof, copper, magnesium, titanium, and alloys containing these. In addition, the surface of the metal part may be subjected in advance to a surface treatment, such as anodizing, or painting. The metal part used in this embodiment can be a metal article that has been molded into a desired shape according to the application and the like, and before insert molding, the metal part may be molded into the desired shape by pouring molten metal or the like into a mold of the desired shape, or machined into the desired shape by cutting or the like using a machine tool, for example.

The thickness of the metal part is, at the thinnest portion, preferably 0.5 mm or more, and preferably 20 mm or less. Further, the thickness of the metal part is, at the thickest portion, preferably 0.5 mm or more, and preferably 20 mm or less.

It is noted that it is not necessarily required that the entire metal part is made of metal, and the inside of the metal part may be hollow or have other materials embedded inside.

### <Insert molded body>

The insert molded body of this embodiment usually has a welded portion. As used herein, "welded portion" refers to a weld formed at the interface between a plurality of resin flows when the resin flows merge together in the cavity of the mold when the insert molded body is molded.

More specifically, Figure 1 is a schematic diagram for illustrating the insert molded body of this embodiment, showing a cross section of the insert molded body. In Figure 1, reference numeral 1 indicates the flow direction of the resin composition of the insert molded body, reference numeral 2 (dotted line portions) indicates welded portions, reference numeral 3 indicates the metal part, and reference numeral 4 indicates the resin part, respectively. When the resin composition is injected from direction 1 with the metal part 3 placed in the mold in this manner, a welded portion is formed at portions 2.

The insert molded body in this embodiment may have one welded portion or two or more welded portions, but usually has two or more welded portions. Further, a practical upper limit on the number of welded portions is 100 or less, and the number of welded portions may be 50 or less, or 10 or less.

The insert molded body of this embodiment preferably has a three-layer structure in which the resin part, the metal part, and the resin part are in contact with each other in that order. Here, the two resin parts may or may not be continuous, but are usually continuous. An example of a structure in which two resin parts are continuous is the structure shown in Figure 1 above. That is, in Figure 1, there is a resin part 4 on both sides of the metal part 3, and when viewed from the flow direction 1 of the resin composition, a three-layer structure in which the metal part and the resin parts are in contact with each other in the above-mentioned order is formed, and the resin parts are continuous. Because the resin parts are continuous in this way, a welded portion is formed in which the resin composition flows in two directions in the portion having the metal part.

More preferably, in the insert molded body of this embodiment, the entire surface of the inserted metal part is covered with the resin part. However, portions of the entire surface of the metal part that cannot be covered with the resin composition during molding, such as holes for fixing the metal part inserted during molding, are excepted.

The insert molded body of this embodiment can be preferably used even in a structure in which the ratio of the thickness of the resin part to the thickness of the metal part (resin part/metal part) is small, the load on the resin part is large, and the structure is prone to cracking.

Specifically, the minimum value of the ratio of the thickness of the resin part to the thickness of the metal part (resin part/metal part) of the insert molded body of this embodiment is 1.5 or less, and can also be 1.2 or less, 1.0 or less, 0.9 or less, 0.8 or less, 0.75 or less, 0.65 or less, 0.60 or less, 0.55 or less, or 0.50 or less. Even if the minimum value is set so as to be not more than the upper limit value, the resin part of the insert molded body of this embodiment is unlikely to crack, and can be preferably used. The lower limit value of the minimum value of the ratio of the thickness of the resin part to the thickness of the metal part (resin part/metal part) of the insert molded body of this embodiment is preferably 0.1 or more, more preferably 0.15 or more, further preferably 0.2 or more, much further preferably 0.22 or more, and still much further preferably 0.25 or more. By setting the minimum value so as to not be less than the lower limit value, it is possible to effectively suppress cracking of the metal insert molded body.

The insert molded body is preferably produced using pellets obtained by melt-kneading a resin composition containing a polyacetal resin and an elastomer using a twin-screw extruder at a rotation speed of 90 rpm or more. The resin composition here is the resin composition described above.

The insert molded body of this embodiment has excellent weld elongation, and can therefore be suitably used for safety parts and the like, such as seat belt attachment anchors (especially seat belt attachment anchors for automobile seat belts) and seat belt tongues.

Examples of the seat belt attachment anchor include those described with reference to Figure 1 and in paragraph 0095 of Japanese Patent Laid-Open No. 2022-98154 A, the contents of which are incorporated herein by reference.

Additionally, the insert molded body of this embodiment can be widely used for other automotive parts, building material parts, electrical/electronic parts, office equipment parts, or parts of miscellaneous goods.

### Examples

The present invention will now be described in more detail with reference to the following examples. The materials, usage amounts, proportions, processing details, processing procedures, and the like shown in the following examples can be changed as appropriate without departing from the spirit of the present invention. Therefore, the scope of the present invention is not limited to the specific examples shown below.

If the measuring equipment and the like used in the examples is difficult to obtain due to discontinuation or the like, measurements can be made using other equipment with equivalent performance.

### 1. Raw materials

The following raw materials were used.

**[Table 1]**

| Abbreviation | Details |
|---|---|
| POM (A) | F20-03, manufactured by Mitsubishi Engineering-Plastics Corporation, MVR: 7 cm³/10 min, copolymer |
| POM (B) | F30-03, manufactured by Mitsubishi Engineering-Plastics Corporation, MVR: 23 cm³/10 min, copolymer |
| POM (C) | A10-03, manufactured by Mitsubishi Engineering-Plastics Corporation, MVR: 2 cm³/10 min, copolymer |
| CSR (M577) | Kane Ace M-577, manufactured by Kaneka Corporation, core-shell elastomer, core: acrylate-based rubber, shell: acrylic resin |
| CSR (M910) | Kane Ace M-910, manufactured by Kaneka Corporation, core-shell elastomer, core: butadiene-containing rubber, shell: acrylic resin |
| CSR (SX-006) | Metablen SX-006, manufactured by Mitsubishi Chemical Corporation, core-shell elastomer, core: silicone-acrylic hybrid rubber, shell: acrylonitrile resin |
| TPU | Polyurethane, manufactured by BASF, product No.: Elastollan S80ASH10 |

### 2. Examples 1 to 5 and Comparative Examples 1 to 7

### <Production of resin composition (pellets)>

Each component shown in Tables 2 and 3 was uniformly mixed in the proportions (parts by mass) shown in Tables 2 and 3 using a super mixer manufactured by Kawada Seisakusho.

The resultant mixture was melted and shear mixed at a cylinder temperature of 200°C and the screw rotation speed and die discharge rate shown in Table 2 or 3 using a twin-screw or single-screw extruder having the screw diameter shown in Table 2 or 3 to produce resin composition pellets. The twin-screw extruder used was a "PCM-30" manufactured by Ikegai Corp., and the single-screw extruder used was a "VS-40" manufactured by Tanabe Plastics Machinery Co., Ltd.

The temperature of the resin composition when it was discharged from the die was measured by a K thermocouple.

### <Weld elongation (%)>

The pellets obtained above were heat-treated for 4 hours in a hot air circulation dryer at a temperature of 80°C.

Next, the dried pellets were molded into an ASTM tensile test specimen (thickness 1.6 mm) having a welded portion in the center using an injection molding machine with the cylinder temperature set at 195°C and the mold temperature set at 80°C, and the prepared test specimen was subjected to a tensile test in accordance with ASTM D638 to measure weld elongation.

The injection molding machine used was an EC-100S manufactured by Shibaura Machine.

The results are shown in Tables 2 and 3 below. The unit is %.

### <Flexural modulus (MPa)>

The pellets obtained above were heat-treated for 4 hours in a hot air circulation dryer at a temperature of 80°C.

Next, the dried pellets were injection molded in accordance with the ISO9988-2 standard using an injection molding machine with the cylinder temperature set at 195°C and the mold temperature set at 90°C to obtain a multipurpose test specimen (ISO test specimen) having a thickness of 4 mm.

Next, the 4 mm-thick multipurpose test specimen (ISO test specimen) was subjected to a bending test using a fully automatic bending tester at a bending test speed of 2 mm/min in accordance with the method described in ISO178 to measure the flexural modulus.

The injection molding machine used was an EC-100S manufactured by Shibaura Machine. The fully automatic bending tester used was manufactured by Shimadzu Corporation.

The results are shown in Tables 2 and 3 below. The units are shown in MPa.

### <Maximum secondary particle size (nm) of core-shell elastomer>

A test specimen for scanning electron microscopy (SEM) observation was cut out with a diamond knife such that the center of the ISO test specimen obtained above was parallel to the flow direction of the resin composition during molding.

Osmium tetroxide was vapor-deposited on the observation surface of the obtained test specimen for SEM observation, and then an SEM image was acquired using a scanning electron microscope (SEM).

From the obtained SEM image, the maximum length of the island-shaped portions derived from the elastomer was taken as the maximum secondary particle size of the elastomer.

The vapor deposition of the osmium tetroxide was carried out under conditions of 8 mA for 60 seconds using an "Osmium Coater" manufactured by Meiwafosis. The scanning electron microscope used was a "Scanning Electron Microscope (SEM) S-4800" manufactured by Hitachi High Technologies. The SEM image was acquired under the following conditions: acceleration voltage 1 kV, a signal LA100 (U), emission current 6 µA, probe current: Normal.

### <Time to breakage of insert molded body (hr)>

The pellets obtained above were heat-treated for 4 hours in a hot air circulation dryer at a temperature of 80°C.

Next, a metal insert molded piece with a thickness ratio of the resin part to the metal part (minimum value, thickness of the resin part/thickness of the metal part) of 0.5 from the dried pellets using an injection molding machine with the cylinder temperature set to 195°C and the mold temperature set to 80°C. The insert metal was made of S55C with a thickness of 2 mmt, and was heated to 80°C on a hot plate before molding, and then set in the mold immediately before molding.

The injection molding machine used was an EC-100S manufactured by Shibaura Machine.

The insert molded body obtained above was placed in a hot air oven at 90°C and checked every 120 hours up to 1500 hours. Five experts visually checked the insert molded body, and the time (unit: hours) at which three or more experts judged the insert molded body to have broken was evaluated. The results are shown in Tables 2 and 3 below.

**[Table 2]**

| | Example 1 | Example 2 | Example 3 | Example 4 | Example 5 | Comparative Example 1 |
|---|---|---|---|---|---|---|
| POM (A) | 90 | 93 | 90 | 90 | 90 | 100 |
| POM (B) | | | | | | |
| POM (C) | | | | | | |
| CSR (M577) | 10 | 7 | | 10 | 10 | |
| CSR (M910) | | | 10 | | | |
| CSR (SX-006) | | | | | | |
| TPU | | | | | | |
| Extruder used | twin-screw | twin-screw | twin-screw | twin-screw | twin-screw | twin-screw |
| Extruder diameter D (mm) | 30 | 30 | 30 | 30 | 30 | 30 |
| Screw rotation speed (rpm) | 120 | 120 | 120 | 250 | 70 | 120 |
| Die discharge rate (kg/hr) | 10 | 10 | 10 | 10 | 10 | 10 |
| Temperature of resin composition at time of discharge from die (°C) | 215 | 212 | 220 | 230 | 215 | 207 |
| Weld elongation (%) | 30 | 20 | 30 | 25 | 25 | 17 |
| Flexural modulus (MPa) | 2000 | 2100 | 2000 | 2000 | 2000 | 2600 |
| Maximum secondary particle size (nm) | 278 | 280 | 151 | 291 | 301 | - |
| Thickness ratio of resin part to metal part | 0.5 | 0.5 | 0.5 | 0.5 | 0.5 | 0.5 |
| Time to breakage of insert molded body (hr) | >1500 | >1500 | >1500 | >1500 | >1500 | 600 |

**[Table 3]**

| | Comparative Example 2 | Comparative Example 3 | Comparative Example 4 | Comparative Example 5 | Comparative Example 6 | Comparative Example 7 |
|---|---|---|---|---|---|---|
| POM (A) | | | 90 | 90 | 90 | 90 |
| POM (B) | | 90 | | | | |
| POM (C) | 100 | | | | | |
| CSR (M577) | | 10 | | | 10 | 10 |
| CSR (M910) | | | | | | |
| CSR (SX-006) | | | 10 | | | |
| TPU | | | | 10 | | |
| Extruder used | twin-screw | twin-screw | twin-screw | twin-screw | single-screw | twin-screw |
| Extruder diameter D (mm) | 30 | 30 | 30 | 30 | 40 | 30 |
| Screw rotation speed (rpm) | 120 | 120 | 120 | 120 | 80 | 50 |
| Die discharge rate (kg/hr) | 10 | 10 | 10 | 10 | 20 | 10 |
| Temperature of resin composition at time of discharge from die (°C) | 220 | 210 | 215 | 210 | 210 | 210 |
| Weld elongation (%) | 17 | 5 | 5 | 5 | 5 | 5 |
| Flexural modulus (MPa) | 2600 | 2000 | 2000 | 2000 | 2000 | 2000 |
| Maximum secondary particle size (nm) | - | 1925 | 1054 | - | 1987 | 2011 |
| Thickness ratio of resin part to metal part | 0.5 | 0.5 | 0.5 | 0.5 | 0.5 | 0.5 |
| Time to breakage of insert molded body (hr) | 840 | 600 | 600 | 600 | 600 | 600 |

As is clear from the above results, the insert molded body of the present invention had excellent weld elongation (Examples 1 to 5). In contrast, when a core-shell elastomer was not included (Comparative Example 1 and Comparative Example 5), the weld elongation was low and the time to failure of the insert molded body was short. Further, even in the case where a core-shell elastomer was included, when the maximum secondary particle size of the core-shell elastomer exceeded 1000 nm (Comparative Examples 2 to 4 and 7), the weld elongation was low and the time to failure of the insert molded body was short.

### Reference Signs List

- 1: flow direction of the resin composition of the insert molded body
- 2: welded portion
- 3: metal part
- 4: resin part

## Claims

1. An insert molded body comprising:
a resin part formed from a resin composition containing a polyacetal resin and an elastomer; and
a metal part,
wherein the elastomer contains a core-shell elastomer,
a polyurethane content in 100% by mass of the resin composition is less than 1% by mass,
the core-shell elastomer in the resin part has a maximum secondary particle size of 1000 nm or less, and
a minimum value of a thickness ratio of the resin part of the insert molded body to the metal part (resin part/metal part) is 1.5 or less.

2. The insert molded body according to claim 1, wherein the polyacetal resin has a melt volume rate (MVR) measured at 190°C and 2.16 kg in accordance with the ISO1133 standard of from 0.5 to 20 cm³/10 minutes.

3. The insert molded body according to claim 1, wherein the insert molded body has a three-layer structure in which the resin part, the metal part, and the resin part are in contact with each other in that order.

4. The insert molded body according to claim 1, wherein the insert molded body has a welded portion.

5. The insert molded body according to claim 1, wherein the core-shell elastomer in the resin part has a maximum secondary particle size of from 10 to 900 nm.

6. The insert molded body according to claim 1, wherein a core-shell elastomer content in the resin composition is from 5 to 40% by mass.

7. The insert molded body according to claim 1, wherein in the core-shell elastomer, the core contains a butadiene-containing rubber and/or an acrylate-based rubber, and the shell contains an acrylic resin.

8. The insert molded body according to claim 1, wherein
the polyacetal resin has a melt volume rate (MVR) measured at 190°C and 2.16 kg in accordance with the ISO1133 standard of from 0.5 to 20 cm³/10 minutes,
the insert molded body has a three-layer structure in which the resin part, the metal part, and the resin part are in contact with each other in that order,
the insert molded body has a welded portion,
the core-shell elastomer in the resin part has a maximum secondary particle size of from 10 to 900 nm,
a core-shell elastomer content in the resin composition is from 5 to 40% by mass,
in the core-shell elastomer, the core contains a butadiene-containing rubber, and the shell contains an acrylic resin.

9. A seat belt attachment anchor comprising the insert molded body according to any one of claims 1 to 8.

10. A method for producing the insert molded body according to any one of claims 1 to 8, wherein the method uses pellets obtained by melt-kneading a resin composition containing a polyacetal resin and an elastomer using a twin-screw extruder at a rotation speed of 90 rpm or more.
